# EUROPEAN PATENT SPECIFICATION

(11) **EP 2 653 255 B1**
(45) Date of publication and mention of the grant of the patent: **29.08.2018**
(21) Application number: 13002017.5
(22) Date of filing: 17.04.2013
(51) Int. Cl.: B23K 3/03, B23K 3/02

(54) **Soldering assembly having detachable tip**
Lötanordnung mit abnehmbarer Spitze
Ensemble de soudure avec extrémité amovible

(30) Priority: 17.04.2012 US 201261625500 P; 29.11.2012 US 201213689420
(43) Date of publication of application: 23.10.2013
(73) Proprietor: Hakko Corporation, Osaka-shi, Osaka 556-0024 (JP)
(72) Inventor: Miyazaki, Mitsuhiko, Osaka-shi, Osaka, 556-0024 (JP); Mochizuki, Toshikazu, Osaka-shi, Osaka, 556-0024 (JP); Wakamatsu, Aiko, Osaka-shi, Osaka, 556-0024 (JP)
(74) Representative: Müller-Boré & Partner Patentanwälte PartG mbB

(56) References cited:
- DE-A1- 2 412 060
- DE-B1- 1 565 515
- US-A- 2 062 940
- US-A- 3 423 781
- US-A- 5 059 769
- US-A- 5 248 076

## Description

### FIELD OF THE INVENTION

The present invention relates generally to a soldering assembly, and more particularly to a soldering assembly for use with or including a detachable tip.

### BACKGROUND OF THE INVENTION

As shown in JP patent No. 4,464,213, soldering tools are used to manufacture a wide range of products.

The working tip of a soldering tool often becomes oxidized and requires replacement. Replacement is usually accomplished by removing the working tip from the soldering tool, which often requires the use of tools and handling of ancillary parts such as nuts and screws. The use of tools and handling of ancillary parts add to manufacturing costs since tools must be procured and extra pieces of the ancillary parts needed in the event of inadvertent loss.

DE 15 65 515 B1 discloses a soldering assembly, forming the base of the preamble of claim 1, including a heater arranged in a casing tube and a tip. The tip has a sheath-like portion with a cylindrical bore to accommodate an end portion of the casing tube, where the heater is arranged inside.

DE 24 12 060 A1 discloses a soldering assembly including a heater arranged in a holder and a tip. The tip is fixed on the heater via metal layer.

The object of the present invention is to improve durability and long-term reliability of a soldering assembly with a removable tip.

### SUMMARY OF THE INVENTION

To solve the aforementioned problems, the present invention is a soldering assembly as defined in claim 1. According to the aspect of the present invention, when the linkage receives a rotational force that moves the first and second cam elements to be rotated relatively about the central axis of the heater, the linkage transforms the rotational force into a force that moves along the direction of the central axis of the heater, and transmits between the lock means and the heater to move relatively along the central axis of the heater. Therefore, the lock means and the heater move to be relatively closed to or away from each other along the central axis. Consequently, the lock means is operated relatively with respect to heater between the tip securing position where the tip is secured to the heater, and the tip releasing position where the tip is released from the heater. Hence, one can replace the tip without any special tools to replace the soldering tip. Furthermore, the locking state can be sustained by utilizing the urging force by the bias means because the bias means urges the linkage in a direction where the first and second cam elements are connected along the central axis. Accordingly, comparing with a structure that the tip are fastened by exclusively relying on clamping force by screws or a friction force, the aforementioned aspect of the present invention enables to enhance resistant ability to vibration or the like. A lock state can also be stable for a long term. Durability and long-term reliability are also assured.

In another preferable aspect of the present invention, the first cam element is plurally disposed on the lock means, and the second cam element is plurally disposed corresponding to the number of the first cam elements. According to the aspect of the present invention, engaging posture of respective first and second cam elements can be stable, so that the trustable power transmission can be achieved.

In another preferable aspect of the present invention, one of the first and second cam elements is in the form of a ramp feature configured to define a cam surface that is inclined as to transform the urging force from the bias means applied to the linkage into a moving force to relatively move the locking means to the tip releasing position with respect to the heater. According to the aspect of the present invention, when the first cam element and the second cam element is relatively movable in a circumference direction, the bias force of the bias means works the lock means to move in a tip releasing position via the first cam element from the second cam element. Therefore, an operator can easily perform the tip replacement work.

In another preferable aspect of the present invention, the lock means includes a sleeve that covers an outer surface of the heater, and the cam surface of the ramp feature is an edge of a recess formed in an inner surface of the sleeve. According to the aspect of the present invention, the first cam element can be formed by relatively easy manufacturing method. According to the present invention, the heater integrally comprises a cover for containing the bias means. According to the aspect of the present invention, safety operation of the bias means in the cover can be achieved.

In another preferable aspect of the present invention, the cover configures a part of a handle. According to the present invention, the linkage configures the first and second cam elements to be set so that a reaction force of the bias means increases as the lock means moves from the tip releasing position to the tip securing position. According to the aspect of the present invention, when the tip is locked, the reaction force of the bias means becomes strongest. Therefore, the tip can be locked in more impregnable manner. Also, the releasing operation can be done easily because when the linkage receives a force which moves the lock means from the tip securing position to the tip releasing position, the force is amplified by the reaction force of the bias means and works in a direction where the relative position of the lock means and the heater displaces to the tip releasing position.

In another aspect of the present invention, wherein the linkage configures the first and second cam elements to be set so that a reaction force of the bias means increases as the lock means moves from the tip releasing position to the tip securing position, the linkage includes a detent that temporarily and detachably holds the first and second cam elements against the urging force of the bias means when the lock means is on the tip securing position. According to the aspect of the present invention, the first cam element and the second cam element are temporarily held against the urging force when the lock means moves to the tip securing position. Accordingly, the locking state can be impregnable.

In another preferable aspect of the present invention, the linkage configures the first and second cam elements to be set so that a reaction force of the bias means increases as the lock means moves from the tip securing position to the tip releasing position. According to the aspect of the present invention, when the lock means is at the tip releasing position, the reaction force of the bias means becomes strongest. Therefore, securing operation can be easily done by the reaction force of the bias means when the lock means is moved from the tip releasing position to the tip securing position. Further, even if the tip receives the force toward the releasing direction, the lock would not unduly be released because of the reaction force of the bias means.

In another preferable aspect of the present invention, wherein the linkage configures the first and second cam elements to be set so that a reaction force of the bias means increases as the lock means moves from the tip securing position to the tip releasing position, the linkage includes a detent that temporarily and detachably holds the first and second cam elements against the urging force of the bias means when the lock means is on the tip releasing position. According to the aspect of the present invention, the first cam element and the second cam element are temporarily held against the urging force when the lock means moves to the tip releasing position. Accordingly, one can replace the tip without receiving the reaction force during tip replacement work. Meanwhile, the lock operation is easily done to lock the new tip after completing the replacement work by only releasing the temporal holding of the first cam element and the second cam element, because the lock means moves automatically to the tip securing position by the reaction force of the bias means.

In another aspect of the present invention further comprises a tip holder for holding the tip. According to the aspect of the present invention, the existing tip can be utilized for embodying the present invention because there is no need for special machining to the tip itself.

In another preferable aspect of the present invention, further comprising a tip holder for holding the tip, wherein the second cam element is in the form of a protruding member integrally formed on an outer surface of the tip holder, and the first cam element is a recess having an opening for engaging or disengaging the protruding member at one end side, and having the detent at the other end side. According to the aspect of the present invention, the first cam element that configures the ramp feature and the second element serve as a mechanism for detachably securing the tip through the tip holder to the lock means. Further, the existing tip can be utilized for embodying the present invention because there is no need for special machining to the tip itself.

In another preferable aspect of the present invention, the second cam element is in the form of a protruding member integrally formed on an outer surface of the tip, and the first cam element is a recess having an opening for engaging or disengaging the protruding member at one end side, and having the detent at the other end side. According to the aspect of the present invention, the first cam element that configures the ramp feature and the second element serve as a mechanism for detachably securing the tip to the lock means.

In another preferable aspect of the present invention, further comprising an opposing lock means integrally disposed with the heater, the opposing lock means configured to oppose to the lock means, wherein the lock means is mounted on the opposing lock means so that the lock means is rotatable relative to the opposing lock means with respect to the central axis, and the second cam element is formed on the opposing lock means, and is in the form of an opposing ramp feature configured to define a cam surface that is inclined to engage with the first cam element. According to the aspect of the present invention, one can perform the replacement work without touching the heated tip. Conventionally, removal of the working tip can require an operator to handle the working tip or parts of the soldering tool which are normally too hot to touch. The person must then wait for the soldering tool to cool down to a safe temperature, which increasing manufacturing down time. In the embodiments of the present invention, there is no need to touch the tip, and not just eliminating the need for special tools, the time required for replacement is shortened, thereby contributing to the improvement of the rate of operation.

In another preferable aspect of the present invention, the tip is provided with a protruding member on an outer periphery of a proximal side thereof, and the lock means includes a hook, the hook is defined by an opening for engaging or disengaging with the protruding member, and by a recess communicating with the opening in a circumferential direction, the hook is adapted to engage with the protruding member introduced from the opening. According to the aspect of the present invention, attaching- or detaching operations of the tip with the lock means can be done with simple structure.

According to the present invention, as described above, it is possible to exchange the tip without any special tools to replace the soldering tip, by applying a force being twisted around the central axis of the heater to the linkage. Furthermore, since the bias means urges the linkage in a direction where the first and second cam elements is connected along the central axis, it performs a remarkable effect in that it enhances resistant ability to vibration or the like; a lock state can also be stable for a long term; and durability and long-term reliability are also assured.

The features and advantages of the invention will be more readily understood from the following detailed description which should be read in conjunction with the accompanying drawings.

### BRIEF DESCRIPTION OF THE DRAWINGS

FIG. 1 is perspective view of a soldering assembly with a soldering tip.
FIG. 2 is an exploded view of parts of a soldering assembly, showing a soldering tip holder, soldering tip, heater, bias member, and lock member separated from each other.
FIGS. 3A-3C are partial cross-sectional diagrams showing relative movement between a soldering tip holder and a lock member.
FIG. 4 is a diagram showing a soldering tip holder and a lock member of a soldering assembly.
FIG. 5 is a plan view of a soldering assembly with a soldering tip.
FIG. 6 is a plan view of a heater.
FIG. 7A is a plan view of a lock member.
FIG. 7B is a VII-VII cross-sectional view, from the arrowed side of FIG.7A.
FIG. 8 is a plan view showing the heater and the lock member of FIGS. 6 and 7 partially contained in a cover by break lines.
FIG. 9 is a perspective view of a tip.
FIGS. 10A-10C are partial internal and partial cross-sectional diagrams showing relative movement between a soldering tip and a lock member.
FIGS. 11A-11E are perspective views of a soldering assembly, showing movements for releasing and securing a soldering tip.
FIG. 12 is a detailed perspective view of a region XII in FIG. 11C, showing an interface between the soldering tip and a distal portion of a lock member.
FIG. 13 is a partial internal view of the distal portion of the lock member, showing a hook feature engaging a rib of a soldering tip.
FIG. 14 is a plan view of a lock member.
FIG. 15 is a detailed perspective view of a portion of the lock member.
FIG. 16 is a partial internal view of a cover, showing an opposing lock member attached to the cover.
FIG. 17 is a detailed perspective view of the opposing lock member.
FIG. 18 is a partial internal view, showing an interface (A) between the soldering tip and the hook feature of the lock member, and an interface (B) between a ramp feature of the lock member and an opposing ramp feature of the opposing lock member.
FIGS. 19A-19E are a diagrammatic sequence of movements at interface (B) and corresponding movements at interface (A) for releasing and securing the soldering tip.
FIG. 20 is a plan view of a soldering tip having a hook feature.
FIG. 21A is a graph showing a relationship between the stroke and reaction force of an embodiment.
FIG. 21B is a graph showing a relationship between the stroke and reaction force relates to another embodiment.

### DETAILED DESCRIPTION OF THE INVENTION

As used herein, the word "soldering" refers to a process, apparatus, assembly, tool or device involving the application and/or removal of molten metal to/from a work piece. A non-limiting example of a molten metal is solder. Non-limiting examples of a work piece are circuit boards and metal objects.

As used herein, the term "soldering iron" refers to a tool used to apply and/or remove molten material to/from a work piece, and encompasses desoldering tools which remove molten metal from a work piece.

The terms "tip", "soldering tip", and "soldering iron tip" are used interchangeably herein and refer to a working tip of a tool used to apply and/or remove molten material to/from a work piece. These terms encompass desoldering tips that remove molten metal from a work piece by suction or by other methods. It is to be understood that one tip can have a configuration that is different than another tip.

In aspects of the present invention, a soldering assembly comprises a heater, a lock member, and a bias member. The heater includes a distal segment. The lock member is moveable relative to the heater, includes a ramp feature, and is configured to receive a tip or a tip holder. The bias member is configured to urge movement of the lock member away from the distal segment of the heater.

In other aspects, the lock member includes a plurality of ramp features configured to receive the tip or the tip holder.

In other aspects, the lock member includes a cylindrical wall, or a sleeve, and each of the ramp features includes a ramp surface facing in a proximal direction away from the distal segment of the heater.

In other aspects, the ramp feature is in the form of a slot or a depression formed into the sleeve 254 of the lock member, and the ramp surface is on an edge of the slot or the depression.

In other aspects, the soldering assembly further comprises a soldering tip holder including a distal portion and a proximal portion, the proximal portion configured to engage onto and disengage from the ramp feature of the lock member.

In other aspects, when the proximal portion of the soldering tip holder is engaged onto the ramp feature of the lock member, twisting of the soldering tip holder causes the lock member to work against the bias member and to move towards the distal segment of the heater.

In other aspects, the proximal portion of the soldering tip holder includes a pin, and during the twisting of the soldering tip holder, the pin slides on the ramp feature.

In other aspects, the soldering tip holder includes a hollow tube, the heater extends through the lock member and the hollow tube, and the soldering tip holder is capable of being twisted around a central axis of the heater when the proximal portion of the soldering tip holder is engaged onto the ramp feature of the lock member.

In other aspects, the soldering assembly further comprises a soldering tip including a flange retained within the hollow tube of the soldering tip holder in a manner that causes the soldering tip to press against the distal segment of the heater when the soldering tip holder is twisted around the central axis of the heater.

In other aspects, the soldering assembly further comprises a soldering tip including a distal part and a proximal part, the proximal part configured to engage onto and disengage from the ramp feature of the lock member.

In other aspects, when the proximal part of the soldering tip is engaged onto the ramp feature of the lock member, twisting of the soldering tip causes a part of the lock member to push against the bias member and to move towards the distal segment of the heater.

In other aspects, wherein the proximal part of the soldering tip includes a rib, and during the twisting of the soldering tip, the rib slides on the ramp feature.

In other aspects, wherein the soldering tip is capable of being twisted around a central axis of the heater when the proximal part of the soldering tip is engaged onto the ramp feature of the lock member.

In other aspects, the soldering tip is pulled proximally against the distal segment of the heater when the soldering tip is twisted around the central axis of the heater.

In other aspects, the soldering assembly further comprises an opposing lock member including an opposing ramp feature in sliding contact with the ramp feature of the lock member, wherein the sliding contact is maintained by the bias member.

In other aspects, the lock member includes a distal end segment configured to engage and disengage a soldering iron tip.

In other aspects, the lock member is capable of being rotated relative to the opposing lock member, the distal end segment includes a hook feature coupled to the ramp feature of the lock member, wherein when the lock member is rotated relative to the opposing lock member, the sliding contact between the ramp feature and the opposing ramp feature causes movement of the hook feature relative to the heater from a tip releasing position to a tip securing position.

In other aspects, either one or both of the ramp feature and the opposing ramp feature includes a detent for temporarily holding the hook feature at the tip releasing position.

In other aspects, the movement of the hook feature includes rotational movement relative to the heater and axial movement relative to the heater.

In other aspects, the soldering assembly further comprises the soldering iron tip including a rib, wherein the hook feature is oriented to receive and release the rib when the hook feature is at the tip releasing position, and the hook feature is oriented to engage and retain the rib when the hook feature is at the tip securing position.

As used herein, any term of approximation such as, without limitation, "near", "about", "approximately", "substantially", "essentially" and the like mean that the word or phrase modified by the term of approximation need not be exactly that which is written but may vary from that written description to some extent. The extent to which the description may vary will depend on how great a change can be instituted and have a person of ordinary skill in the art recognize the modified version as still having the properties, characteristics and capabilities of the modified word or phrase. For example and without limitation, a feature that is described as "substantially equal" to a second feature encompasses the features being exactly equal and the features being readily recognized by a person of ordinary skilled in the art as being equal although the features are not exactly equal.

### [First Embodiment]

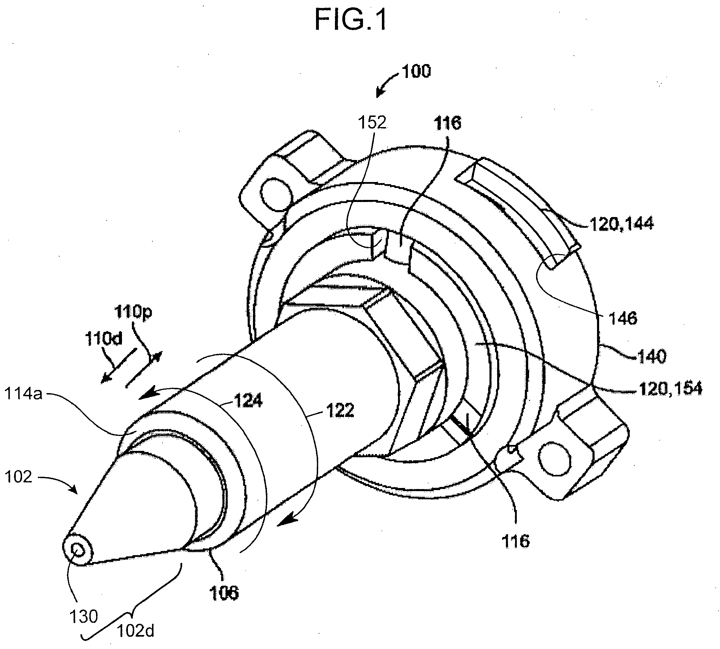

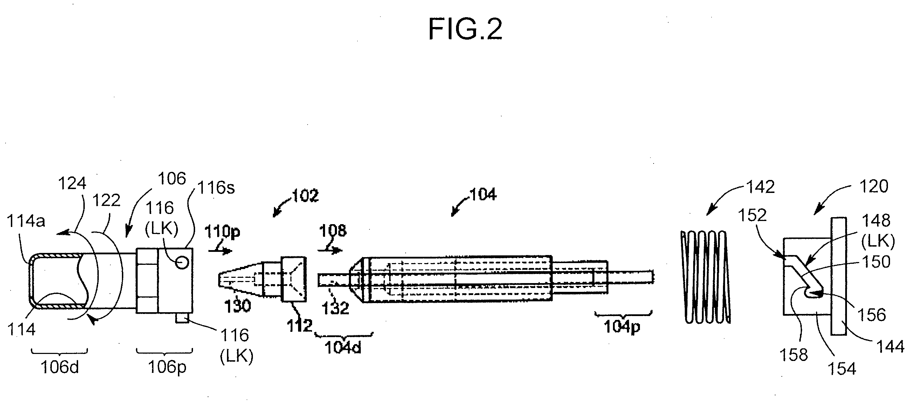

Referring now in more detail to the exemplary drawings for purposes of illustrating embodiments of the invention, wherein like reference numerals designate corresponding or like elements among the several views, there is shown in FIGS. 1 and 2 soldering assembly 100 with detachable soldering tip 102. Soldering tip 102 is temporarily retained on heater 104 by soldering tip holder 106. The tip holder 106 includes a tube 114. A distal portion of the tube 114 forms an inner flange 114a.

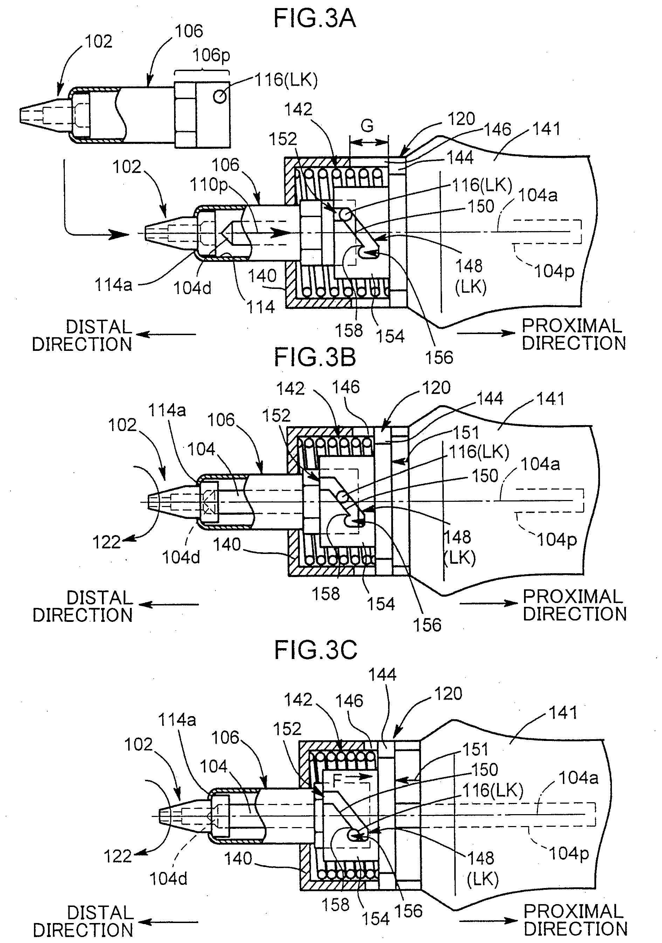

No special tools are needed to mount the soldering tip. To mount soldering tip 102 on heater 104, a user places soldering tip 102 on heater 104 as shown by arrow 108 in FIG.2. Next, the user places soldering tip holder 106 over soldering tip 102 and heater 104, as shown by arrow 110p in FIG. 1. Inner flange 114a of soldering tip holder 106 engages flange 112 on soldering tip 102 to prevent soldering tip 102 from separating from heater 104. Therefore, the tip 102 is held by the tip holder 106 in such a way that the tip 102 protrudes from the distal portion 106d of the tip holder 106 (FIG.3). Pins 116 protrude radially outward from outer surface 106s of soldering tip holder 106. Pins 116 are located at proximal portion 106p of soldering tip holder 106 and engage lock member 120 (FIG. 1). Twisting of soldering tip holder 106, in the twisting direction of arrow 122, causes pins 116 to become trapped within lock member 120 so that soldering tip holder 106 and soldering tip 102 are temporarily locked in place.

No special tools are needed to remove the soldering tip. To remove soldering tip 102, soldering tip holder 106 is twisted in the direction of arrow 124 (opposite that of arrow 122) until pins 116 are aligned with openings in lock member 120. Next, soldering tip holder 106 is pulled in a distal direction, as shown by arrow 110d (opposite that of arrow 110p) so that distal portion 106d of soldering tip holder 106 disengages flange 112 on soldering tip 102.

In FIGS. 1 and 2, soldering tip 102 and heater 104 are configured for desoldering or for removing solder. Soldering tip 102 and heater 104 include central passageways 130, 132 through which molten solder can be suctioned away from a work piece.

In other embodiments, soldering tip 102 and heater 104 are used to applying solder to a work piece and do not necessarily include central passageways 130, 132 for vacuuming soldering.

In some embodiments, soldering tip holder 106 and soldering tip 102 are temporarily locked as shown in FIGS. 3A to 3C. Cover 140 contains bias members 142 and lock member 120. Cover 140 is fixedly attached to a housing 141 of soldering assembly 100. In an example shown in the figures, the housing 141 forms a solder collecting chamber which can contains suctioned solder.

The lock member 120 includes a sleeve 154 substantially formed in a cylindrical shape. The sleeve 154 integrally has an arm 144 disposed on a proximal side. The arm 144 is inserted into an opening 146 formed in a proximal side of the cover 140. A bias member 142 is disposed between the arm 144 and an end wall of the cover 140.

Bias members 142 can each be a spring or other resilient device capable of compression and expansion. Bias members 142 are compressed between the end wall of the cover 140 and arms 144 of lock member 120. Arms 144 protrude through holes 146 in cover 140. Hole 146 is configured to prevent rotation of lock member 120 relative to cover 140 while allowing lock member 120 to move axially (arrows 151) as will be described below.

Next, this embodiment is provided with a linkage LK. The linkage LK includes a first cam element and a second cam element. The first cam element is disposed on the lock member 120. The second cam element is an element which is so linked as to displace relative to the first cam element. In the first embodiment, the lock member 120 includes a plurality of ramp features 148 as the first cam element arranged around the sleeve 154 of lock member 120. Soldering tip holder 106 includes a plurality of pins 116 as the second cam element, there being one pin 116 for each one of the ramp features 148. Only one pair of ramp feature 148 and pin 116 is shown in FIGS. 3A to 3C for clarity of illustration. Only distal segment 104d and proximal segment 104p of heater 104 are shown (in broken line) for clarity of illustration. It is to be understood that heater 104 extends through soldering tip holder 106, cover 140, and lock member 120, and into main housing 141.

In the illustrated embodiments, pin 116 is a circular post. It will be appreciated that pin 116 can have other shapes, including without limitation a rectangular post or rib.

As shown in FIG. 3A, soldering tip holder 106 is moved by a user in a proximal direction according to arrow 110p so that pin 116 enters opening 152 in cylindrical wall 154 of lock member 120. Thereafter, as shown in FIG. 3B, rotation of soldering tip holder 106 in the direction of arrow 122 around central axis 104a of heater 104 causes pin 116 to slide against cam surface 150, which pulls lock member 120 in a distal direction and causes lock member 120 to move in the direction of arrows 151. As shown in FIG. 3C, with continued rotation in the direction of arrow 122, lock member 120 moves further in the direction of arrows 151 and pin 116 moves into detent 156 of ramp feature 148. The boundary of detent 156 is formed in part by bump 158. Detent 156 helps to prevent pin 116 from sliding in the reverse direction out of ramp feature 148 after the user releases soldering tip holder 106. With pin 116 located within detent 156, soldering tip holder 106 is temporarily held in a position at which soldering tip holder 106 pulls soldering tip 102 (FIGS. 1 and 2) tightly against distal segment 104d of heater 104 due to expansion forces F exerted by bias members 142 on lock member 120.

Release of soldering tip 102 is performed by reversing the movements of soldering tip holder 106 described above for securing soldering tip 102.

Hole 146 of cover 140 has about the same width as arms 144 of lock member 120 partially protruding out. There is an axial gap G between arms 144 and the top edge of holes 146. Therefore, when tip holder 106 is rotated, arms 144 engage the side edges of holes 146 and lock member 120 is prevented from rotating but is forced to move in the axial direction as shown by arrow 151 in FIG. 3B.

In the illustrated embodiments of FIGS. 1 to 3C, ramp feature 148 is in the form of a slot, as a recess, formed through cylindrical walls 154 of lock member 120. The slot is configured to receive pin 116 on soldering tip holder 106.

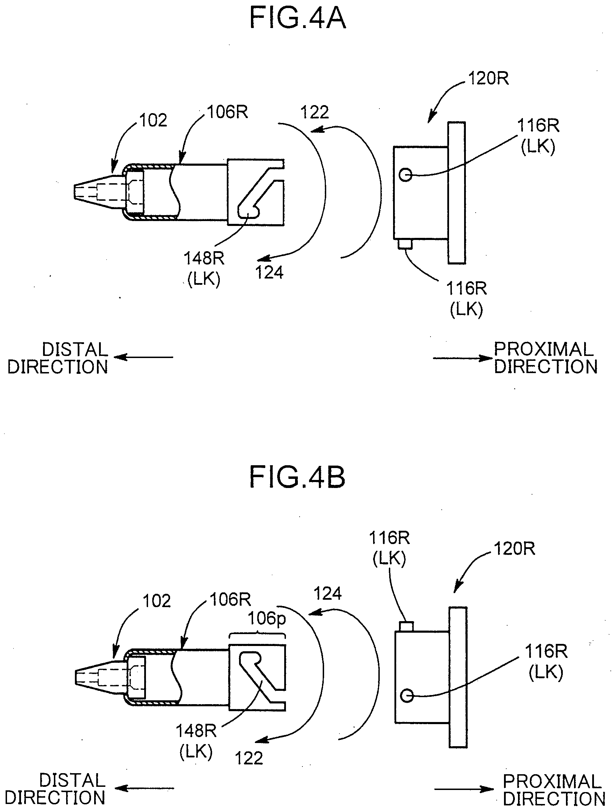

In alternative embodiments, as shown in FIG. 4, ramp feature 148R, in the form of a slot, is part of soldering tip holder 106R, and pin 116R is part of lock member 120R. The slot in soldering tip holder 106R is configured to receive pin 116R of the lock member. In the configuration shown in FIG. 4, pins 116R, disposed on the lock member 120R, perform a function as the first cam element, while ramp features 148R disposed on the sliding tip holder 106R perform a function as the second cam element. Therefore, soldering tip holder 106R and lock member 120R function substantially the same as soldering tip holder 106 and lock member 120 of FIGS. 3A to 3C. Soldering tip holder 106R and lock member 120R can be arranged -- in relation to each other and in relation to a soldering tip, cover, heater, and bias membersas described above for soldering tip holder 106 and lock member 120. FIG.4A shows an example in which a direction (arrow 122) to lock the tip and a direction (arrow 124) to release the lock of the tip are in reverse with respect to the directions shown in FIG. 1. FIG. 4B shows another example in which a direction (arrow 122) to lock the tip and a direction (arrow 124) to release the lock of the tip are the same as the directions shown in FIG. 1.

### [Second embodiment]

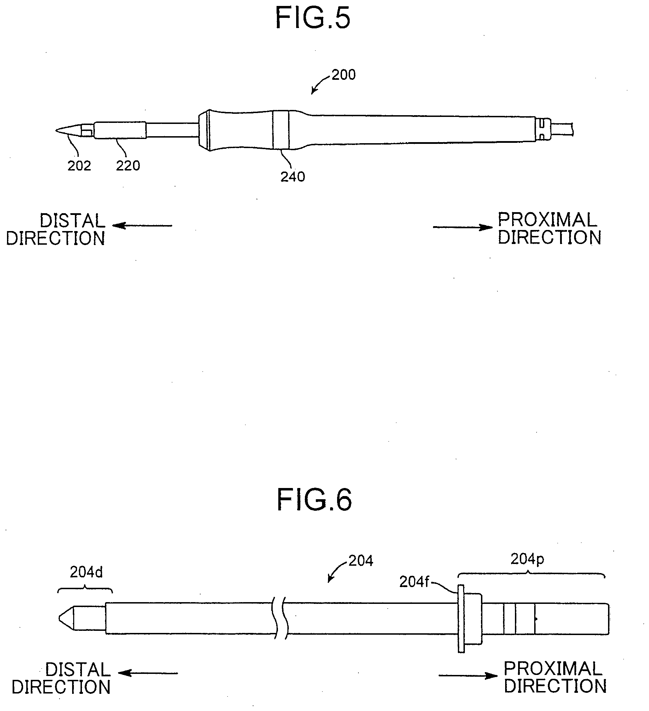

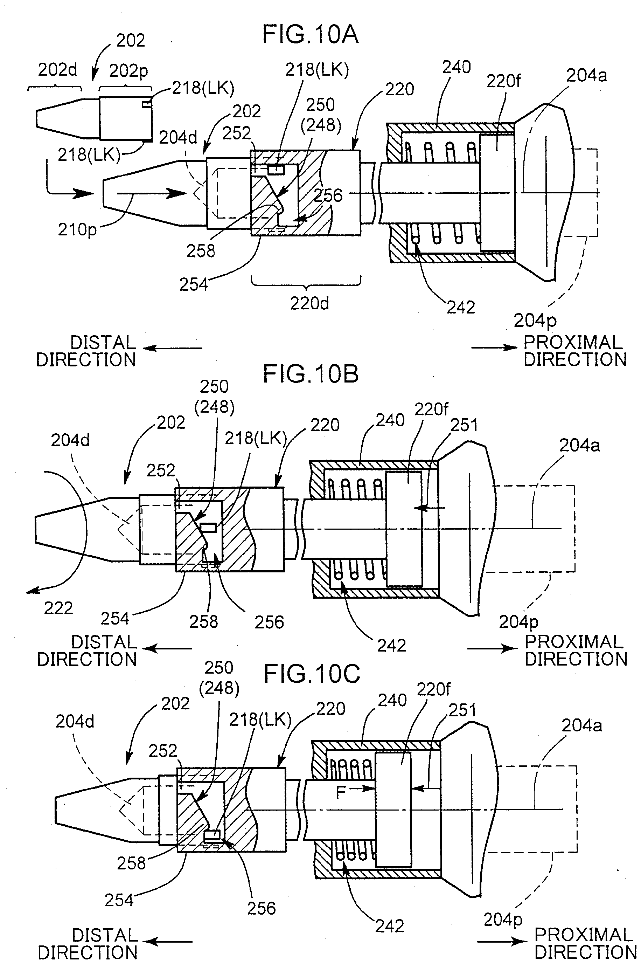

Next, referring to FIGS. 5 to 10C, a second embodiment will be described herein below. The second embodiment relates to a soldering assembly 200 which is an example of soldering iron.

FIGS. 5 to 10C show the soldering assembly 200, and portions thereof, that do not need a soldering tip holder to couple soldering tip 202 to a lock member. Soldering tip 202 connects directly to lock member 220. Movements for mounting and removing soldering tip 202 to/from lock member 220 are substantially the same as the above-described movements for mounting and removing soldering tip holder 106 to/from lock member 120 in FIGS. 1-3.

An advantage to of having the soldering tip connect directly to the lock member is that the soldering tip can have virtually any shape and size. Soldering tips with large curves or large working ends can be too large to fit through a soldering tip holder, which can make removal of such soldering tips from the soldering tip holder difficult if not impossible. Replacement of such soldering tips may require replacement of the soldering tip and the soldering tip holder together. This drawback is avoided by having the soldering tip connect directly to the lock member.

FIG. 5 shows soldering tip 202 mounted on lock member 220. Lock member 220 keeps soldering tip 202 in direct thermal contact with heater 204 (FIG. 6), which is hidden from view in FIG. 5.

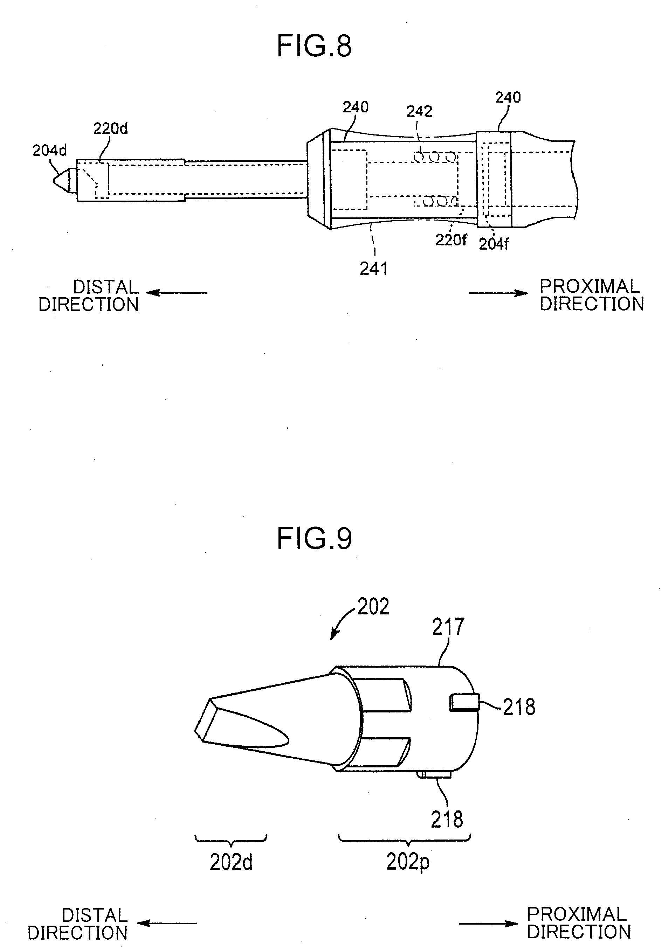

FIG. 6 shows heater 204 without parts that would normally be surrounding it or attached to it during use of soldering assembly 200. Heater 204 includes distal segment 204d and proximal segment 204p. Proximal segment 204p includes flange 204f to help fixedly hold heater 204 to cover 240 (FIG. 8). Proximal segment 204p also includes exposed electrical contacts connected to heating elements embedded within heater 204. Distal segment 204d includes a conical outer surface configured to mate with a conical inner surface of soldering tip 202. In other embodiments, the outer surface at distal segment 204d can have other configurations, including without limitation, cylindrical, flat, and spherical.

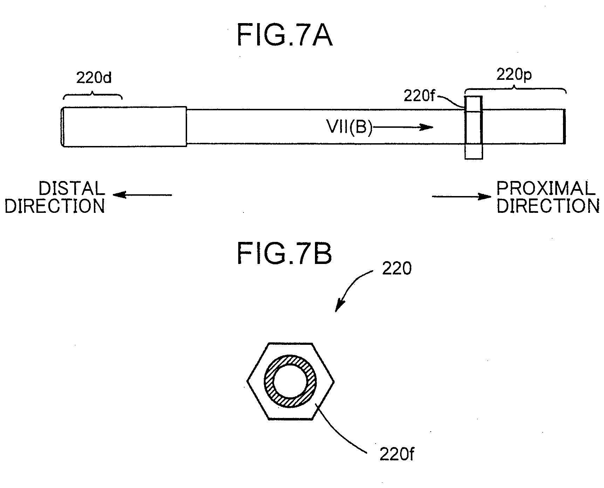

FIG. 7 shows lock member 220 without parts that would normally be surrounding it or attached to it during use of soldering assembly 200. FIG. 7A is plan view, and FIG. 7B is cross-sectional view. Lock member 220 includes distal portion 220d and proximal portion 220p. Distal portion 220d is configured to engage onto and disengage from soldering tip 202. Proximal portion 220p includes flange 220f that is configured to engage bias member 242 (FIG. 8).

FIG. 8 shows an internal view of cover 240. Cover 240 includes an internal cavity that contains bias member 242 and flange 220f of lock member 220. Bias member 242 is compressed between a surface of cover 240 and flange 220f. Cover 240 and flange 220f are configured to prevent rotation of lock member 220 relative to cover 240 while allowing lock member 220 to move axially (arrows 251) as will be described below. The housing 241 of the soldering assembly 200 configures handle or grip together with the elastic surrounding (not shown).

FIG. 9 shows soldering tip 202 including outer surface 217 and ribs 218 protruding radially outward from outer surface 217. In the illustrated embodiments, rib 218 is rectangular. It will be appreciated that rib 218 can have other shapes, including without limitation a circular post.

FIGS. 10A to 10C show relationships between soldering tip 202 and distal portion 220d of lock member 220 and relationships between cover 240, bias member 242, and flange 220f of the proximal portion 220p of lock member 220.

Lock member 220 includes a sleeve 254 at a distal end thereof. The sleeve 254 includes a plurality of ramp features 248 as the first cam element. Ramp features 248 are in the form of grooves or depressions as a recess, that are formed in an inner surface of the sleeve 254 intervally spaced in a circumferential direction. Soldering tip 202 has a plurality of ribs 218 as the second cam element, there being one rib 218 for each one of the ramp features 248. Only pair of ramp feature 248 and rib 218 is shown in FIGS. 10A-10C for clarity of illustration. Only distal segment 204d and proximal segment 204p of heater 204 are shown (in broken line) for clarity of illustration. It is to be understood that heater 204 extends through lock member 220 and cover 240 and into the base of soldering tip 202.

As shown in FIG. 10A, soldering tip 202 is moved in a proximal direction according to arrow 210p so that rib 218 enters opening 252 in the sleeve 254 of lock member 220. Thereafter, as shown in FIG. 10B, rotation of soldering tip 202 in the direction of arrow 222 around central axis 204a of heater 204 causes rib 218 to slide against cam surface 250, which pulls lock member 220 in a distal direction and causes lock member 220 to move in the direction of arrows 251. As shown in FIG. 10C, with continued rotation in the direction of arrow 222, lock member 220 moves further in the direction of arrows 251 and rib 218 moves into detent 256 of ramp feature 248. The boundary of detent 256 is formed in part by bump 258. Detent 256 helps to prevent rib 218 from sliding in the reverse direction out of ramp feature 248 after the user releases soldering tip 202. With rib 218 located within detent 256, soldering tip 202 is temporarily held in a position at which it is pulled tightly against distal segment 204d of heater 204 due to expansion forces F exerted by bias members 242 on lock member 220.

Flange 220f of lock member 220 is hexagonal (FIG.7B), and the part of the cover 240 where flange 220f is located is a hexagonal cavity. Bias member 242 is circular shaped which will fit inside the hexagonal cavity. In this way, when tip 202 is rotated, lock member 202 does not rotate and will move in the axial direction.

### [Third embodiment]

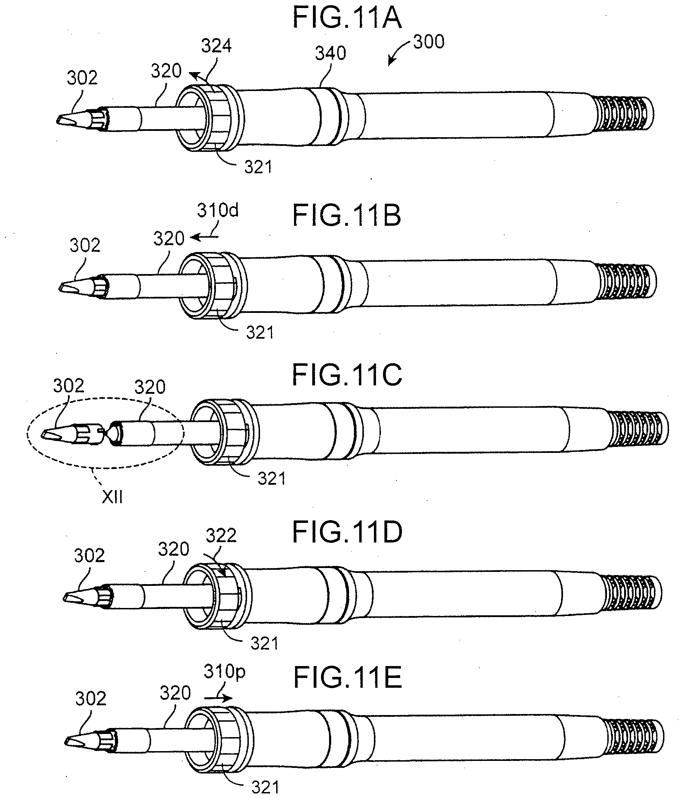

FIGS. 11A to 19E show a soldering assembly 300, and portions thereof, that allow for dismounting of soldering tip 302 from a lock member without any need for the user to directly manipulate, hold, or rotate soldering tip 302. Instead of rotating the soldering tip as in the soldering assembly of FIGS. 10A to 10C, soldering tip 302 can be mounted and dismounted with rotation of only lock member 320.

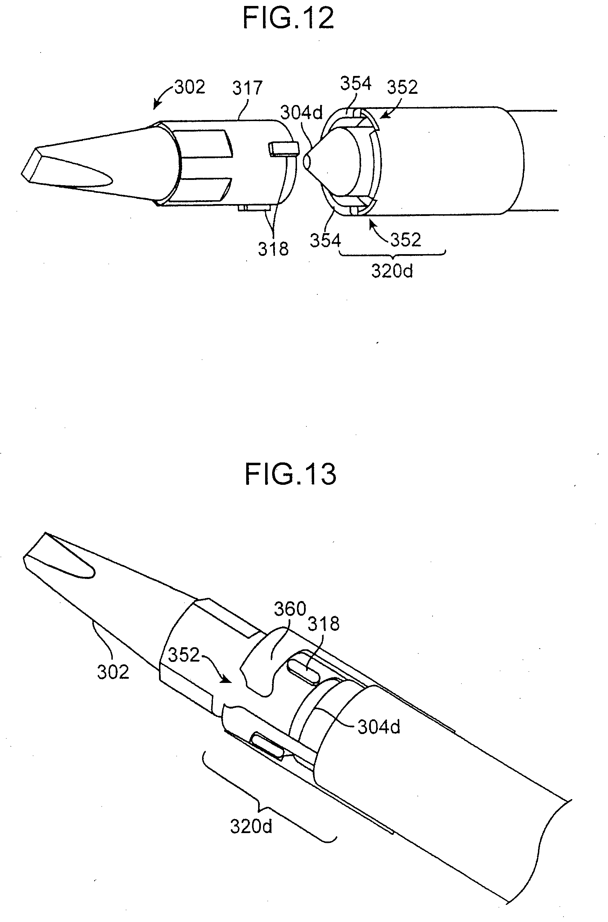

FIG. 11A shows lock member 320 oriented in a tip securing position at which soldering tip 302 is pulled by lock member 320 onto distal portion 304d (FIG. 12) of the heater. Rotation of knob 321 of lock member 320 in the direction of arrow 324 moves lock member 320 to a tip releasing position, as shown in FIG. 11B. In the tip releasing position, lock member 320 has rotated and moved axially in the distal direction of arrow 310d. Soldering tip 302 is free to be pulled or drop away from heater distal portion 304d.

FIG. 11C shows soldering tip 302 after it has pulled or dropped away from heater distal portion 304d. Soldering tip 302 can be pulled by gravity and drop away by its own weight, without any need for the user to touch soldering tip 302. Alternatively, FIG. 11C also shows a replacement soldering tip before it is inserted into lock member 320.

After inserting soldering tip 320 into lock member 320 while in the tip releasing position shown in FIG. 11D, rotation of knob 321 in the direction of arrow 322 moves lock member 320 to a tip securing position, as shown in FIG. 11E. In the tip securing position, lock member 320 has rotated and moved axially in the proximal direction of arrow 310p.

FIG. 12 shows an enlarged view of soldering tip 302 and distal portion 320d of lock member 320. Soldering tip 302 includes ribs 318, or protruding member. Ribs 318 are located at about the distal end of soldering tip 302. Ribs 318 project radially outward from outer surface 317 and are sized to fit within openings 352 in cylindrical wall 354 of lock member 320.

FIG. 13 shows a portion of cylindrical wall 354 removed to show internal features of distal portion 320d of lock member 320. Opening 352 is adjacent to hook feature 360. Lock member 320 is oriented in the tip securing position. In the tip securing position, opening 352 has rotated away from rib 318 of soldering tip 302, which traps rib 318 and thereby keeps soldering tip 302 in contact with heater distal portion 304d.

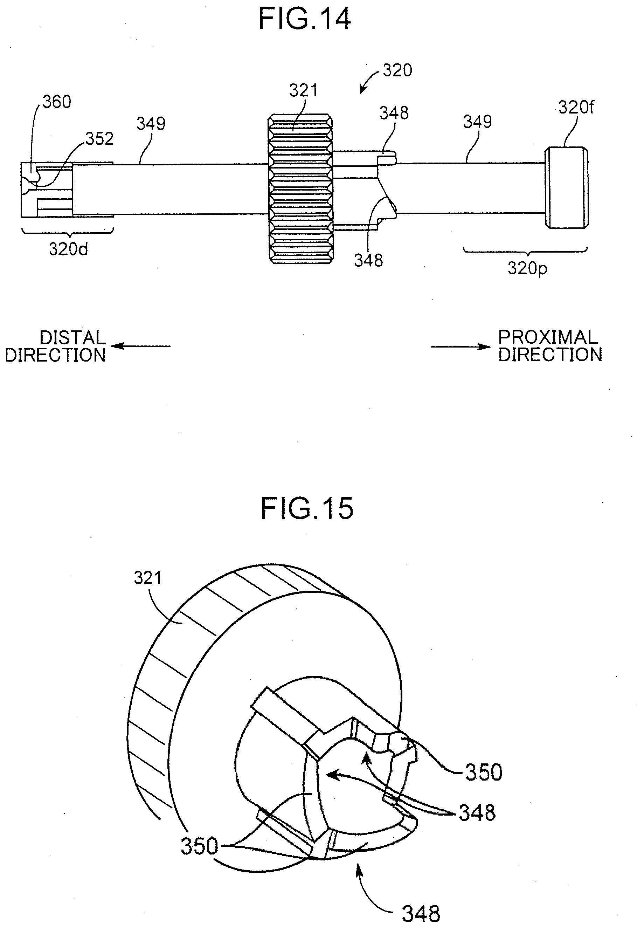

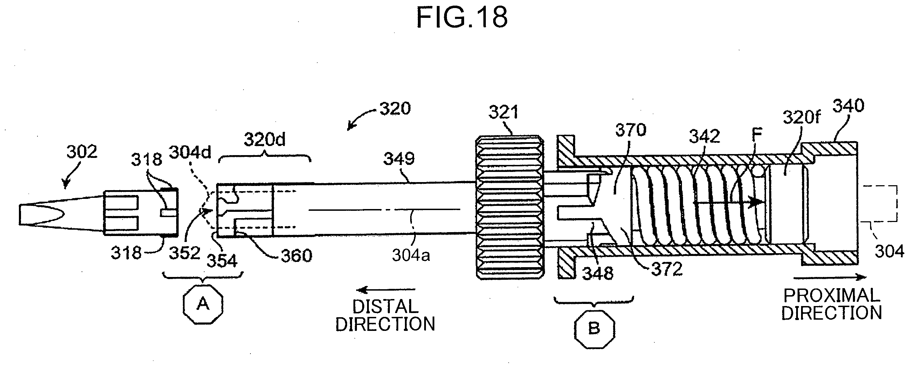

FIG. 14 shows lock member 320, which includes distal portion 320d and proximal portion 320p. Hollow post 349 connects distal portion 320d to proximal portion 320p. Distal portion 320d is configured to engage onto and disengage from soldering tip 302. Proximal portion 320p includes flange 320f configured to engage bias member 342 (FIG. 18) . Knob 321 and a plurality of ramp features 348 are located between proximal portion 320p and distal portion 320d. Ramp features 348 are rugged with respect to the axial direction, as they are a radially inward step to the hollow post 349. Three ramp features 348 are arranged circumferentially around the hollow post 349, although only two of the ramp features are clearly visible in FIG. 14.

FIG. 15 shows a detailed view of a portion of lock member 320 with the hollow post 349 removed in order to show all ramp features 348. Each of the ramp features includes cam surface 350 that faces in a proximal direction toward flange 320f.

In other embodiments, lock member 320 includes one, two, or more than three ramp features.

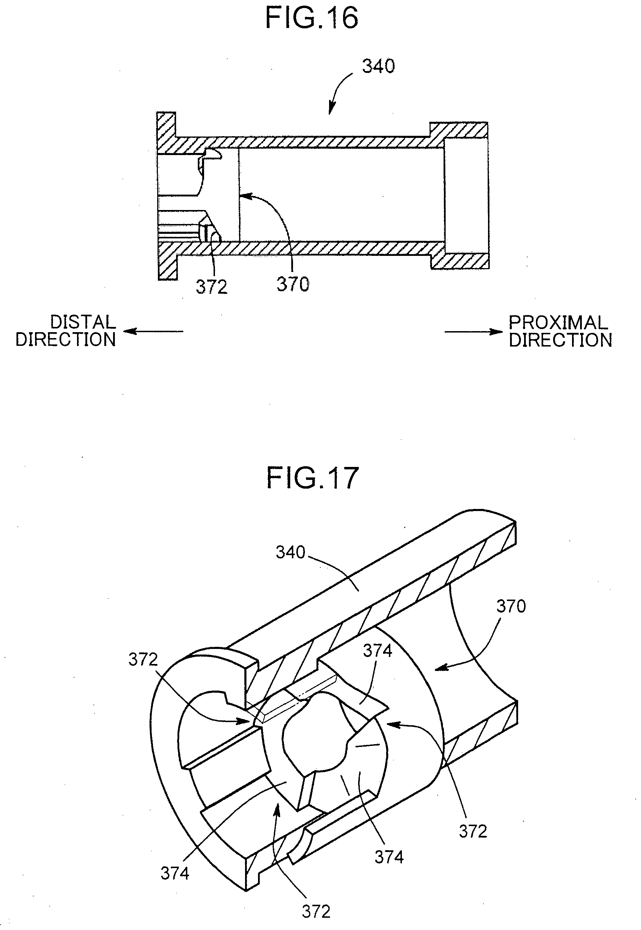

FIG. 16 shows cover 340 that contains opposing lock member 370. Opposing lock member 370 includes a plurality of opposing ramp features 372, as the second cam element, which is normally located in contact with and opposition to ramp features 348 of lock member 320.

FIG. 17 shows a detailed view of opposing lock member 370 with a portion of cover 340 removed. Each opposing ramp feature 372 includes opposing cam surface 374 that faces in a distal direction. When a user rotates lock member 320, cam surfaces 350 of lock member 320 slide against opposing cam surfaces 374.

FIG. 18 shows lock member 320, cover 340, opposing lock member 370, and bias member 342 assembled together. It should be understood that the heater extends through lock member 320, cover 340, opposing lock member 370, and bias member 342.

Bias member 342 is compressed between lock member flange 320f and opposing lock member 370. Hollow post 349 extends through bias member 342 and connects flange 320f to ramp features 348 and hook feature 360 at distal portion 320d of lock member 320. Therefore, the hollow post 349, the flange 320f, the ramp feature 348, and the hook feature 360 are integrated with each other. Bias member 342 exerts an expansion force F on flange 320f. Expansion force F is in a proximal direction and is transmitted by post 349 to ramp features 348 and hook feature 360.

Letter (A) in a polygon box designates the interface between soldering tip 302 and hook feature 360 of lock member 320. Letter (B) in a polygon box designates the interface between ramp features 348 of lock member 320 and opposing ramp features 372 of opposing lock member 370.

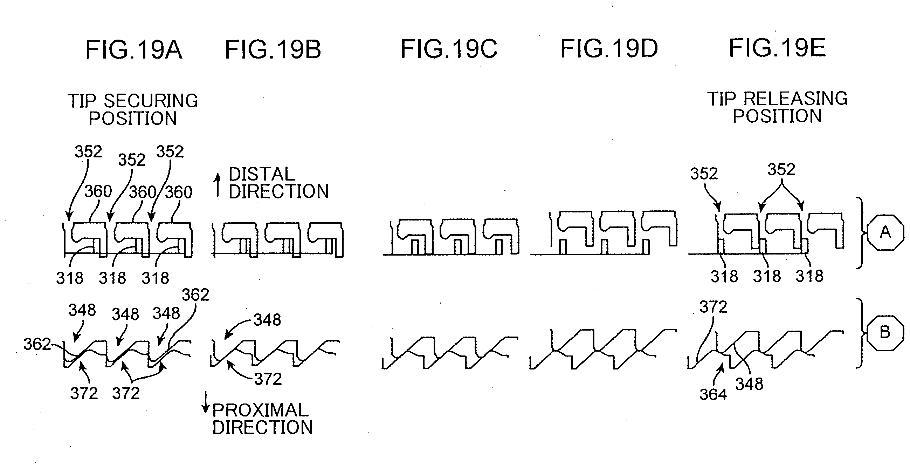

FIGS. 19A to 19E are a diagrammatic sequence of movements at interface (B) and corresponding movements at interface (A) for releasing soldering tip 302. In the reverse direction, FIGS. 19E to 19A are a diagrammatic sequence of movements for securing soldering tip 302. The movements are caused by user rotation of lock member 320, by manipulation of knob 321, relative to cover 340 and opposing lock member 370.

As discussed above, ribs 318 of soldering tip 302 are configured to pass through openings 352 in cylindrical wall 354 of lock member 320. The ability to pass through depends on whether openings 352 and ribs 318 are aligned with each other.

In FIG. 19A, hook features 360 are in a tip securing position. Openings 352 are not aligned with ribs 318, which prevents soldering tip 302 from being released. Due to expansion force F of bias member 342, hook features 360 pull ribs 318 of soldering tip 302 in a distal direction onto distal portion 304d (FIG. 12) of the heater. Expansion force F is transmitted to ribs 318.

In FIG. 19E, hook features 360 are in a tip releasing position. Openings 352 are aligned with ribs 318. Hook features 360 are raised in a distal direction so that hook features 360 do not pull ribs 318 proximally. Hook features 360 are kept raised since ramp features 348 have slid up opposing ramp feature 372 to detent 364.

FIGS. 19B, 19C, and 19D show a progression between FIGS. 19A and 19E. Starting from 19A, rotation of knob 321 in order to move hook features 360 to the tip releasing position is met with resistance due to contact between ramp features 348 and opposing ramp feature 372. Due to the edge profiles of ramp features 348 and opposing ramp feature 372, continued rotation of knob 321 requires ramp features 348 to slide up in a distal direction (see FIGS. 19B to 19D), which is opposed by expansion force F of bias member 342. The edge profile of each opposing ramp feature 372 includes an upward slope having a peak, followed by a downward slope to a substantially flat region. The flat region forms detent 364. Thus when ramp feature 348 slides up opposing ramp feature 372, the whole lock member 320 moves in the distal direction relative to heater 304, cover 340, and opposing ramp feature 372. With expansion force F working in the proximal direction, when ramp feature 348 reaches the detent as in FIG. 19E, hook features 360 of lock member 320 are kept at the tip releasing position.

In the third embodiment, the linkage LK is set so that the reaction force of bias member increases as the lock member 320 moves from the tip securing position to the tip releasing position. Therefore, in the third embodiment, the reaction force will work at the strongest extent when the lock member moves to a position where the lock of the tip 302 is released. Hence, securing operation can be performed easily by the reaction force of the bias member 342 when the lock member 320 is moved from the tip releasing position to the tip securing position. Also, even if the tip 302 receives force toward the direction to release the lock, the tip 302 would not unduly be released because the tip 302 receives the strongest reaction force of the bias member 342 at the tip releasing position.

Furthermore, in the third embodiment, the linkage LK includes a detent 364 that temporarily and detachably holds the ramp feature 348 and the opposing ramp feature 372 against the expansion force F when the lock member 320 moves to the tip releasing position. Therefore, in the third embodiment, the ramp feature 348 and the opposing ramp feature 372 are temporarily held against the expansion force F when the lock member 320 moves to the tip releasing position. Accordingly, one can replace the tip 302 without receiving the reaction force during tip replacement work. Meanwhile, the lock operation to lock the new tip 302 after completing the replacement work is easily done by only releasing the temporal holding of the ramp feature 348 and the opposing ramp feature 372, because the lock member 320 moves automatically to the tip securing position by the reaction force of the bias member 342.

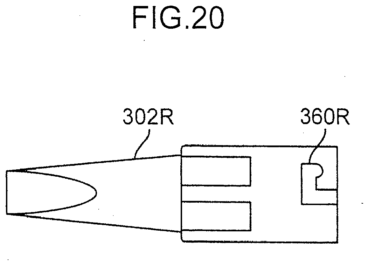

In a reverse embodiment, as shown in FIG. 20, hook feature 360R, in the form of a slot as a recess, is part of soldering tip 302R. A radially protruding rib is part of a lock member. The slot in soldering tip 302R is configured to receive the radially protruding rib. Soldering tip 302R and its corresponding ribbed lock member function substantially the same as soldering tip 302 and lock member 320 of FIGS. 11A to 19E. Soldering tip 302R and ribbed lock member can be arranged -- in relation to each other and in relation to a cover, ramp features, opposing ramp features, heater, and bias members -- as described above for soldering tip 302 and lock member 320.

### [Other Modifications]

As shown for example without limitation in FIGS. 3A-3C, 10A-10C, and 18, in some embodiments a soldering assembly comprises heater 104, 204, 304, lock member 120, 220, 320, and bias member 142, 242, 342. Heater 104, 204, 304 includes distal segment 104d, 204d, 304d. Lock member 120, 220, 320 is moveable relative to heater 104, 204, 304 and includes ramp feature 148, 248, 348. The lock member is configured to receive a tip or tip holder. Bias member 142, 242, 342 is configured to urge movement of lock member 120, 220, 320 away from distal segment 104d, 204d, 304d of heater 104, 204, 304. In some embodiments, lock member 120, 220, 320 includes a plurality of ramp features 148, 248, 348. In some embodiments, the ramp features are configured to receive or engage the tip and or the tip holder.

In some embodiments, lock member 120, 220, 320 includes cylindrical wall 154, 254, 354. Each of the ramp features 148, 248, 348 includes cam surface 150, 250, 350 facing in a proximal direction away from distal segment 104d, 204d, 304d of heater 104, 204, 304.

In some embodiments, ramp feature 148, 248, 348 is in the form of a slot as a recess formed into cylindrical wall 154, 254, 354 of lock member 120, 220, 320. Cam surface 150, 250, 350 is on an edge of the slot as the recess. As shown for example without limitation in FIGS. 2 and 3A-3C, in some embodiments a soldering assembly optionally comprises soldering tip holder 106 including distal portion 106d and proximal portion 106p. Proximal portion 106p is configured to engage onto and disengage from ramp feature 148 of lock member 120.

In some embodiments, when proximal portion 106p of the soldering tip holder is engaged onto ramp feature 148, twisting of soldering tip holder 106 causes lock member 120 to work against bias member 142 and to move towards distal segment 104d of the heater.

In some embodiments, proximal portion 106p of soldering tip holder 106 includes pin 116. During twisting of soldering tip holder 106, pin 116 slides on ramp feature 148. In some embodiments, soldering tip holder 106 includes hollow tube 114. An inner flange 114a is formed with a distal end of the hollow tube 114. Heater 104 extends through lock member 120 and hollow tube 114. Soldering tip holder 106 is capable of being twisted around central axis 104a of heater 104 when proximal portion 106p of soldering tip holder 106 is engaged onto ramp feature 148 of lock member 120.

In some embodiments, a soldering assembly optionally comprises soldering tip 102 including flange 112. Flange 112 is connected, to be held, with the inner flange 114a of the soldering tip holder 106. When soldering tip holder 106 is twisted around central axis 104a of heater 104, the soldering tip 102 is retained within the soldering tip holder 106 while exposing distal portion 102d (FIG. 1), in a manner that causes the inner flange 114a to press the tip 102 through the flange 112 against the distal portion 104d of the heater 104.

As shown for example without limitation in FIGS. 9 and 10A-10C, in some embodiments a soldering assembly optionally comprises soldering tip 202 including distal part 202d and proximal part 202p. Proximal part 202p is configured to engage onto and disengage from ramp feature 248 of lock member 220.

In some embodiments, when proximal part 202p of soldering tip 202 is engaged onto ramp feature 248, twisting of soldering tip 202 causes a part of lock member 220 to push against bias member 242 and to move lock member 220 towards distal segment 204d of the heater.

In some embodiments, proximal part 202p of soldering tip 202 includes rib 218. During the twisting of soldering tip 202, rib 218 slides on ramp feature 248.

In some embodiments, soldering tip 202 is capable of being twisted around central axis 204a of the heater when proximal part 202p of soldering tip 202 is engaged onto ramp feature 248.

In some embodiments, soldering tip 202 is pulled proximally against distal segment 204d of the heater when soldering tip 202 is twisted around central axis 204a of the heater.

As shown for example without limitation in FIGS. 18 and 19A-19E, a soldering assembly optionally comprises opposing lock member 370. Opposing lock member 370 includes opposing ramp feature 372 in sliding contact with ramp feature 348 of lock member 320. The sliding contact is maintained by bias member 342.

In some embodiments, lock member 320 includes distal end segment 320d configured to engage and disengage soldering iron tip 302.

In some embodiments, lock member 320 is capable of being rotated relative to opposing lock member 370. Distal end segment 320d includes hook feature 360 coupled to ramp feature 348 of lock member 320. When lock member 320 is rotated relative to opposing lock member 370, the sliding contact between ramp feature 348 and opposing ramp feature 372 causes movement of hook feature 360 relative to heater 304 from a tip releasing position (FIG. 19E) to a tip securing position (FIG. 19A) .

In some embodiments, either one or both of ramp feature 348 and opposing ramp 372 feature includes detent 364 for temporarily holding hook feature 360 at the tip releasing position.

In some embodiments, the movement of hook feature 360 includes rotational movement relative to heater 304 and axial movement relative to heater 304.

In some embodiments, a soldering assembly comprises soldering iron tip 302 including rib 318. Hook feature 360 is oriented to receive and release rib 318 when hook feature 360 is at the tip releasing position. Hook feature 360 is oriented to engage and retain rib 318 when hook feature 360 is at the tip securing position.

In any one or all of the embodiments described above, the heater can include one or more electrical heating coils or electrical heating elements connected to a power source.

In any one or all of the embodiments described above, the bias member can be a leaf spring, helical spring, torsion spring, or other device configured to self-expand after it is compressed.

In another point of view, each embodiments of the present invention is a soldering assembly comprising: a heater 104, 204, 304; a tip 102, 202, 302 removably secured to a distal segment 104d, 204d, 304d of the heater 104, 204, 304; lock member 120, 220, 320 for securing the tip 102, 202, 302 to the heater 104, 204, 304, the lock member 120, 220, 320 is adapted to move relatively with respect to the heater 104, 204, 304 along a central axis 104a of the heater 104, 204, 304, between a tip securing position where the tip 102, 202, 302 is secured to the distal segment (104d, 204d, 304d) of the heater 104, 204, 304, and a tip releasing position where the tip 102, 202, 302 is released from the heater 104, 204, 304; a linkage LK including a first cam element disposed on the lock member 120, 220, 320 and a second cam element that is connected with the first cam element so that the second cam element is movable relative to the first cam element, the linkage LK transforming a rotational force of the first and second cam elements 148, 248, 348, 116R, 116, 218, 372, 148R relatively rotated with respect to the central axis 104a, 204a, 304a of the heater 104, 204, 304, into a moving force to relatively move the lock member and the heater along the central axis 104a, 204a, 304a of the heater, and transmitting the force between the lock member 120,220,320 and the heater 104, 204, 304 and bias member 142, 242, 342 for urging the linkage LK in a direction where the first and second cam elements are connected along the central axis 104a.

According to the preferred embodiments of the present invention, when the linkage LK receives a rotational force that moves the first and second cam elements to be rotated relatively about the central axis 104a, 204a, 304a of the heater 104, 204, 304, the linkage LK transforms the rotational force into a force that relatively moves the first and second cam elements along the direction of the central axis 104a, 204a, 304a of the heater 104, 204, 304, and transmits between the lock member 120, 220, 320 and the heater 104, 204, 304. Therefore, the lock member 120, 220, 320 and the heater 104, 204, 304 move to be relatively closed to or away from each other. Consequently, the lock member 120, 220, 320 is operated relatively with respect to heater 104, 204, 304 between the tip securing position where the tip is secured to the heater 104, 204, 304, and the tip releasing position where the tip 102, 202, 302 is released from the heater 104, 204, 304. Hence, one can replace the tip without any special tools to replace the soldering tip. Furthermore, the locking state can be sustained by utilizing the urging force by the bias member 142, 242, 342 because the bias member 142, 242, 342 urges the linkage LK in a direction where the first cam element and the second cam element are connected along the central axis 104a, 204a, 304a. Accordingly, comparing with a structure that the tip 102, 202, 302 are fastened by exclusively relying on clamping force by screws or a friction force, the aforementioned embodiments enable to enhance resistant ability to vibration or the like. A lock state can also be stable for a long term. Durability and long-term reliability are also assured.

In a preferred embodiment, for example, the first cam element is in the form of ramp feature 148, 248, 348 formed on respective lock member 120, 220, 320. Meanwhile, it may be the pin 116R of the lock member 120R, for example, shown in the modification of the first embodiment (FIG.4).

Similarly, the second cam element may be a member that enables to move relative to the lock member 120, 220, 320, say, a member fixed to the heater 104, 204, 304, or a member fixed to the tip 102, 202, 302. Also the tip holder 106 can be disposed for holding the tip 102, 202, 302. Second cam element can be disposed on the tip holder 106. The pin 116 of the tip holder 106 in the first embodiment, or the rib 218 of the tip 202 in the second embodiment is respectively an example of the second cam element. Meanwhile, in the third embodiment, the opposing ramp feature 372 of the opposing lock member 370 integrally formed with the cover 340 is an example of the second cam element.

Pins or ribs are interchangeable. The present invention does not limit to these example members.

The recess may be a hole which is open therethrough. Otherwise, the recess may be a groove or depression with a bottom.

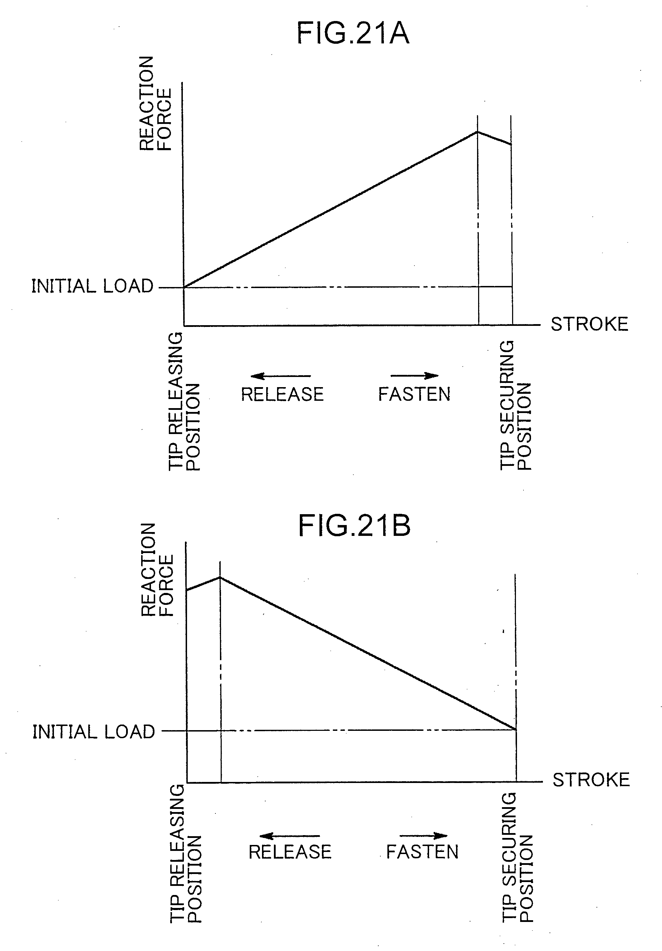

As shown in FIG 21A, in some embodiments, reaction force of the bias member is set so that it increases as the lock member is twisted from the tip releasing position to the tip securing position. However, as shown in FIG. 21B, the present invention may employs reaction force of the bias member that increases as the lock member is twisted from the tip securing position to the tip releasing position. In the latter case, the detent may be set at the vicinity of the tip releasing position.

While several particular forms of the invention have been illustrated and described, it will also be apparent that various modifications can be made without departing from the scope of the invention as defined by the appended claims.

## Claims

1. A soldering assembly (100, 200, 300) comprising:
a heater (104, 204, 304) integrally including a cover (140, 240, 340);
a tip (102, 202, 302) including a flange (112) and removably secured to a distal segment (104d, 204d, 304d) of the heater (104, 204, 304); **characterised by** lock means (120, 220, 320) for securing the tip (102, 202, 302) to the heater (104, 204, 304), the lock means (120, 220, 320) being adapted to move relatively with respect to the heater (104, 204, 304) along a central axis (104a, 204a, 304a) of the heater (104, 204, 304) between a tip securing position where the tip (102, 202, 302) is secured to the distal segment (104d, 204d, 304d) of the heater (104, 204, 304) and a tip releasing position where the tip (102, 202, 302) is released from the heater (104, 204, 304);
a tip holder (106) for holding the tip (102, 202, 302), an inner flange (114a) of the tip holder (106) being configured to engage the flange (112),
a linkage (LK) including a first cam element (148, 248, 348, 116R) disposed on the lock means (120, 220, 320)and a second cam element (116, 218, 372, 148R) being a part of the tip holder (106) and being connected with the first cam element (148, 248, 348, 116R) so that the second cam element (116, 218, 372, 148R) is movable relative to the first cam element (148, 248, 348, 116R), the linkage (LK) transforming a rotational force of the first and second cam elements (148,248,348,116R,116,218,372,148R) relatively rotated with respect to the central axis (104a, 204a, 304a) of the heater (104, 204, 304), into a moving force to relatively move the lock means (120, 220, 320) and the heater (104, 204, 304) along the central axis (104a,204a, 304a) of the heater (104, 204, 304), and transmitting the force between the lock means (120,220,320) and the heater (104,204,304); and
bias means (142, 242, 342) in the cover (140, 240, 340) being compressible for urging the linkage (LK) in a direction where the first and second cam elements (148, 248, 348, 116R, 116, 218, 372, 148R) are connected along the central axis (104a, 204a, 304a), wherein
the bias means (142, 242, 342) is disposed between the cover (140, 240, 340) and the lock means (120, 220, 320),
the tip holder (106) is configured to pull the tip (102, 202, 302) against the distal segment (104d, 204d, 304d) of the heater (104, 204, 304) due to an expansion forces (F) exerted by the bias means (142, 242, 342) on the lock means (120, 220, 320) .

2. The soldering assembly (100, 200, 300) as set forth in claim 1, wherein:
the first cam element (148, 248, 348, 116R) is plurally disposed on the lock means (120, 220, 320); and
the second cam element (116, 218, 372, 148R) is plurally disposed corresponding to the number of the first cam elements (148, 248, 348, 116R).

3. The soldering assembly (100, 200, 300) as set forth in claim 1 or 2, wherein:
one of the first and second cam elements (148, 248, 348, 116R, 116, 218, 372, 148R) is in the form of a ramp feature (148, 248, 348) configured to define a cam surface that is so inclined as to transform an urging force from the bias means (142, 242, 342) applied to the linkage (LK) into a moving force to relatively move the locking means (120, 220, 320) to the tip releasing position with respect to the heater (104, 204, 304).

4. The soldering assembly (100, 200, 300) as set forth in claim 3, wherein:
the lock means (120, 220, 320) includes a sleeve (154, 254, 354) that covers an outer surface of the heater (104, 204, 304); and
the cam surface of the ramp feature (148, 248, 348) is an edge of a recess formed in an inner surface of the sleeve (154, 254, 354).

5. The soldering assembly (100, 200, 300) as set forth in claim 1, wherein:
the cover (240, 340) configures a part of a handle.

6. The soldering assembly (100, 200, 300) as set forth in any one of claims 1 to 5, wherein:
the linkage (LK) configures the first and second cam elements (148, 248, 348, 116R, 116, 218, 372, 148R) to be set so that a reaction force of the bias means (142, 242) increases as the lock means (120, 220) moves from the tip releasing position to the tip securing position.

7. The soldering assembly (100, 200) as set forth in claim 6, wherein:
the linkage (LK) includes a detent that temporarily and detachably holds the first and second cam elements (148, 248, 348, 116R, 116, 218, 372, 148R) against the urging force of the bias means (142, 242) when the lock means (120, 220) is at the tip securing position.

8. The soldering assembly (300) as set forth in any one of claims 1 to 5, wherein:
the linkage (LK) configures the first and second cam elements (148, 248, 348, 116R, 116, 218, 372, 148R) to be set so that a reaction force of the bias means (342) increases as the lock means (320) moves from the tip securing position to the tip releasing position.

9. The soldering assembly (300) as set forth in claim 8, wherein:
the linkage (LK) includes a detent that temporarily and detachably holds the first and second cam elements (148, 248, 348, 116R, 116, 218, 372, 148R) against the urging force of the bias means (342) when the lock means (320) is at the tip releasing position.

10. The soldiering assembly as set forth in claim 7 or 9, wherein:
the second cam element (116, 148R) is in the form of a protruding member integrally formed on an outer surface of the tip holder (106); and
the first cam element (148, 116R) is a recess having an opening for engaging or disengaging the protruding member at one end side, and having the detent at the other end side.

## Patentansprüche

1. Lötanordnung (100, 200, 300), umfassend:
einen Heizer (104, 204, 304), der integral eine Abdeckung (140, 240, 340) enthält,
eine Spitze (102, 202, 302), die einen Flansch (112) enthält und entfernbar an einem distalen Segment (104d, 204d, 304d) des Heizers (104, 204, 304) befestigt ist;
**gekennzeichnet durch**
Verriegelungsmittel (120, 220, 320) zum Befestigen der Spitze (102, 202, 302) an dem Heizer (104, 204, 304), wobei die Verriegelungsmittel (120, 220, 320) angepasst sind, sich relativ in Bezug auf den Heizer (104, 204, 304) entlang einer Mittelachse (104a, 204a, 304a) des Heizers (104, 204, 304) zwischen einer Spitzenbefestigungsposition, wo die Spitze (102, 202, 302) an dem distalen Segment (104d, 204d, 304d) des Heizers (104, 204, 304) befestigt ist, und einer Spitzenlöseposition zu bewegen, wo die Spitze (102, 202, 302) von dem Heizer (104, 204, 304) gelöst ist;
einen Spitzenhalter (106) zum Halten der Spitze (102, 202, 302), wobei ein innerer Flansch (114a) des Spitzenhalters (106) konfiguriert ist, in den Flansch (112) einzugreifen,
ein Gestänge bzw. eine Verbindung (LK) mit einem ersten Nockenelement (148, 248, 348, 116R), das an den Verriegelungsmitteln (120, 220, 320) angeordnet ist, und einem zweiten Nockenelement (116, 218, 372, 148R), das ein Teil des Spitzenhalters (106) ist und mit dem ersten Nockenelement (148, 248, 348, 116R) verbunden ist, so dass das zweite Nockenelement (116, 218, 372, 148R) relativ zu dem ersten Nockenelement (148, 248, 348, 116R) bewegbar ist, wobei die Verbindung (LK) eine Drehkraft des ersten und zweiten Nockenelements (148, 248, 348, 116R, 116, 218, 372, 148), die relativ in Bezug auf die Mittelachse (104a, 204a, 304a) des Heizers (104, 204, 304) gedreht werden, in eine Bewegungskraft umwandelt, um die Verriegelungsmittel (120, 220, 320) und den Heizer (104, 204, 304) relativ entlang der Mittelachse (104a, 204a, 304a) des Heizers (104, 204, 304) zu bewegen, und die Kraft zwischen der Verriegelungsmitteln (120, 220, 320) und dem Heizer (104, 204, 304) überträgt; und
Vorspannmittel (142, 242, 342) in der Abdeckung (140, 240, 340), die komprimierbar sind, um die Verbindung (LK) in eine Richtung zu drängen, wo das erste und zweite Nockenelement (148, 248, 348, 116R, 116, 218, 372, 148R) entlang der Mittelachse (104a, 204a, 304a) verbunden sind, wobei das Vorspannmittel (142, 242, 342) zwischen der Abdeckung (140, 240, 340) und den Verriegelungsmitteln (120, 220, 320) angeordnet ist,
der Spitzenhalter (106) konfiguriert ist, die Spitze (102, 202, 302) gegen das distale Segment (104d, 204d, 304d) des Heizers (104, 204, 304) auf Grund einer Expansionskraft (F) zu ziehen, die von den Vorspannmitteln (142, 242, 342) auf die Verriegelungsmittel (120, 220, 320) ausgeübt wird.

2. Lötanordnung (100, 200, 300) nach Anspruch 1, wobei:
das erste Nockenelement (148, 248, 348, 116R) mehrfach an den Verriegelungsmitteln (120, 220, 320) angeordnet ist; und
das zweite Nockenelement (116, 218, 372, 148R) mehrfach entsprechend der Anzahl der ersten Nockenelemente (148, 248, 348, 116R) angeordnet ist.

3. Lötanordnung (100, 200, 300) nach Anspruch 1 oder 2, wobei:
eines der ersten und zweiten Nockenelements (148, 248, 348, 116R, 116, 218, 372, 148R) in der Form eines Rampenmerkmals (148, 248, 348) ist, das konfiguriert ist, eine Nockenfläche bzw. -oberfläche zu definieren, die dahingehend geneigt ist, eine Drängkraft von den Vorspannmitteln (142, 242, 342), die auf die Verbindung (LK) ausgeübt wird, in eine Bewegungskraft umzuwandeln, um die Verriegelungsmittel (120, 220, 320) relativ zu der Spitzenlöseposition in Bezug auf den Heizer (104, 204, 304) zu bewegen.

4. Lötanordnung (100, 200, 300) nach Anspruch 3, wobei:
das Verriegelungsmittel (120, 220, 320) eine Hülse (154, 254, 354) enthält, die eine äußere Fläche bzw. Oberfläche des Heizers (104, 204, 304) bedeckt); und
die Nockenfläche des Rampenmerkmals (148, 248, 348) eine Kante einer Vertiefung ist, die in einer inneren Fläche bzw. Oberfläche der Hülse (154, 254, 354) gebildet ist.

5. Lötanordnung (100, 200, 300) nach Anspruch 1, wobei:
die Abdeckung (240, 340) einen Teil eines Griffs konfiguriert.

6. Lötanordnung (100, 200, 300) nach einem der Ansprüche 1 bis 5, wobei:
die Verbindung (LK) das erste und das zweite Nockenelement (148, 248, 348, 116R, 116, 218, 372, 148R) dahingehend konfiguriert, so festgelegt bzw. eingestellt zu sein, dass eine Reaktionskraft der Vorspannmittel (142, 242) zunimmt, wenn sich das Verriegelungsmittel (120, 220) von der Spitzenlöseposition zu der Spitzenbefestigungsposition bewegt.

7. Lötanordnung (100, 200) nach Anspruch 6, wobei:
die Verbindung (LK) eine Sperre bzw. Arretierung enthält, die das erste und das zweite Nockenelement (148, 248, 348, 116R, 116, 218, 372, 148R) vorübergehend und lösbar gegen die Drängkraft der Vorspannmittel (142, 242) hält, wenn das Verriegelungsmittel (120, 220) an der Spitzenbefestigungsposition ist.

8. Lötanordnung (300) nach einem der Ansprüche 1 bis 5, wobei:
die Verbindung (LK) das erste und das zweite Nockenelement (148, 248, 348, 116R, 116, 218, 372, 148R) dahingehend konfiguriert, so festgelegt bzw. eingestellt zu sein, dass eine Reaktionskraft der Vorspannmittel (342) zunimmt, wenn sich das Verriegelungsmittel (320) von der Spitzenbefestigungsposition zu der Spitzenlöseposition bewegt.

9. Lötanordnung (300) nach Anspruch 8, wobei:
die Verbindung (LK) eine Sperre bzw. Arretierung enthält, die das erste und das zweite Nockenelement (148, 248, 348, 116R, 116, 218, 372, 148R) vorübergehend und lösbar gegen die Drängkraft der Vorspannmittel (342) hält, wenn das Verriegelungsmittel (320) an der Spitzenlöseposition ist.

10. Lötanordnung (100) nach Anspruch 7 oder 9, wobei:
das zweite Nockenelement (116, 148R) in der Form eines vorspringenden Elements ist, das integral an einer äußeren Fläche bzw. Oberfläche des Spitzenhalters (106) gebildet ist; und
das erste Nockenelement (148, 116R) eine Vertiefung ist, die eine Öffnung zum Ineingriffbringen oder Lösen des vorspringenden Elements an einer Endseite aufweist und die Arretierung an der anderen Endseite aufweist.

## Revendications

1. Ensemble de soudage (100, 200, 300) comprenant :
un élément chauffant (104, 204, 304) incluant intégralement un recouvrement (140, 240, 340) ;
une pointe (102, 202, 302) incluant une bride (112) et fixée de manière amovible à un segment distal (104d, 204d, 304d) de l'élément chauffant (104, 204, 304) ;
**caractérisé par**
des moyens de verrou (120, 220, 320) pour fixer la pointe (102, 202, 302) à l'élément chauffant (104, 204, 304), les moyens de verrou (120, 220, 320) étant adaptés à se déplacer relativement par rapport à l'élément chauffant (104, 204, 304) le long d'un axe central (104a, 204a, 304a) de l'élément chauffant (104, 204, 304) entre une position de fixation de pointe où la pointe (102, 202, 302) est fixée au segment distal (104d, 204d, 304d) de l'élément chauffant (104, 204, 304) et une position de libération de pointe où la pointe (102, 202, 302) est libérée de l'élément chauffant (104, 204, 304) ;
un support de pointe (106) pour maintenir la pointe (102, 202, 302), une bride interne (114a) du support de pointe (106) étant configurée pour s'engager avec la bride (112),
une liaison (LK) incluant un premier élément de came (148, 248, 348, 116R) disposé sur les moyens de verrou (120, 220, 320), et un second élément de came (116, 218, 372, 148R) qui fait partie du support de pointe (106) et qui est connecté au premier élément de came (148, 248, 348, 116R) de sorte que le second élément de came (116, 218, 372, 148R) est mobile par rapport au premier élément de came (148, 248, 348, 116R), la liaison (LK) transformant une force rotative des premier et second éléments de came (148, 248, 348, 116R, 116, 218, 372, 148R) tournés relativement par rapport à l'axe central (104a, 204a, 304a) de l'élément chauffant (104, 204, 304) en une force de déplacement pour déplacer relativement les moyens de verrou (120, 220, 320) et l'élément chauffant (104, 204, 304) le long de l'axe central (104a, 204a, 304a) de l'élément chauffant (104, 204, 304), et transmettant la force entre les moyens de verrou (120, 220, 320) et l'élément chauffant (104, 204, 304) ; et
des moyens d'inclinaison (142, 242, 342) dans le recouvrement (140, 240, 340) étant compressibles pour pousser la liaison (LK) dans une direction où les premier et second éléments de came (148, 248, 348, 116R, 116, 218, 372, 148R) sont connectés le long de l'axe central (104a, 204a, 304a), dans lequel les moyens d'inclinaison (142, 242, 342) sont disposés entre le recouvrement (140, 240, 340) et les moyens de verrou (120, 220, 320),
le support de pointe (106) est configuré pour tirer la pointe (102, 202, 302) contre le segment distal (104d, 204d, 304d) de l'élément chauffant (104, 204, 304) en raison d'une force de dilatation (F) exercée par les moyens d'inclinaison (142, 242, 342) sur les moyens de verrou (120, 220, 320).

2. Ensemble de soudage (100, 200, 300) selon la revendication 1, dans lequel :
le premier élément de came (148, 248, 348, 116R) est disposé de manière plurielle sur les moyens de verrou (120, 220, 320) ; et
le second élément de came (116, 218, 372, 148R) est disposé de manière plurielle pour correspondre au nombre des premiers éléments de came (148, 248, 348, 116R).

3. Ensemble de soudage (100, 200, 300) selon la revendication 1 ou 2, dans lequel : un des premier et second éléments de came (148, 248, 348, 116R, 116, 218, 372, 148R) est sous la forme d'une fonction de rampe (148, 248, 348) configurée pour définir une surface de came qui est inclinée de manière à transformer une force de poussée provenant des moyens d'inclinaison (142, 242, 342) appliquée à la liaison (LK) en une force de déplacement pour déplacer relativement les moyens de verrou (120, 220, 320) vers la position de libération de pointe par rapport à l'élément chauffant (104, 204, 304).

4. Ensemble de soudage (100, 200, 300) selon la revendication 3, dans lequel :
les moyens de verrou (120, 220, 320) incluent un manchon (154, 254, 354) qui recouvre une surface externe de l'élément chauffant (104, 204, 304) ; et
la surface de came de la fonction de rampe (148, 248, 348) est un bord d'un retrait formé dans une surface interne du manchon (154, 254, 354).

5. Ensemble de soudage (100, 200, 300) selon la revendication 1, dans lequel :
le recouvrement (240, 340) configure une partie d'une poignée.

6. Ensemble de soudage (100, 200, 300) selon l'une quelconque des revendications 1 à 5, dans lequel :
la liaison (LK) configure les premier et second éléments de came (148, 248, 348, 116R, 116, 218, 372, 148R) pour être réglés de sorte qu'une force réactionnelle des moyens d'inclinaison (142, 242) augmente à mesure que les moyens de verrou (120, 220) se déplacent de la position de libération de pointe à la position de fixation de pointe.

7. Ensemble de soudage (100, 200) selon la revendication 6, dans lequel :
la liaison (LK) inclut une détente qui maintient de manière temporaire et amovible les premier et second éléments de came (148, 248, 348, 116R, 116, 218, 372, 148R) contre la force de poussée des moyens d'inclinaison (142, 242) lorsque les moyens de verrou (120, 220) sont dans la position de fixation de pointe.

8. Ensemble de soudage (300) selon l'une quelconque des revendications 1 à 5, dans lequel :
la liaison (LK) configure les premier et second éléments de came (148, 248, 348, 116R, 116, 218, 372, 148R) pour être réglés de sorte qu'une force réactionnelle des moyens d'inclinaison (342) augmente à mesure que les moyens de verrou (320) se déplacent de la position de fixation de pointe à la position de libération de pointe.

9. Ensemble de soudage (300) selon la revendication 8, dans lequel :
la liaison (LK) inclut une détente qui maintient de manière temporaire et amovible les premier et second éléments de came (148, 248, 348, 116R, 116, 218, 372, 148R) contre la force de poussée des moyens d'inclinaison (342) lorsque les moyens de verrou (320) sont dans la position de libération de pointe.

10. Ensemble de soudage selon la revendication 7 ou 9, dans lequel :
le second élément de came (116, 148R) est sous la forme d'un élément saillant formé intégralement sur une surface externe du support de pointe (106) ; et
le premier élément de came (148, 116R) est un retrait ayant une ouverture pour l'engagement ou le désengagement de l'élément saillant sur un côté d'extrémité, et ayant la détente sur l'autre côté d'extrémité.
